# EUROPEAN PATENT SPECIFICATION

(11) **EP 1 969 184 B1**
(45) Date of publication and mention of the grant of the patent: **20.04.2011**
(21) Application number: 06830833.7
(22) Date of filing: 28.12.2006
(51) Int. Cl.: D21H 21/28

(54) **REACTIVE DYE GRAFTED BINDERS**
MIT REAKTIVFARBSTOFF GEPFROPFTE BINDEMITTEL
LIANTS GREFFES PAR DES COLORANTS REACTIFS

(30) Priority: 05.01.2006 EP 06100098
(43) Date of publication of application: 17.09.2008
(73) Proprietor: BASF SE, 67056 Ludwigshafen (DE)
(72) Inventor: LENNARTZ, Michael, 79539 Lörrach (DE); HUNGER, Charles, CH-4107 Ettingen (CH)
(74) Representative: Zumstein, Angela
(86) International application number: PCT/EP2006/070237
(87) International publication number: WO 2007/077187

(56) References cited:
- EP-A- 1 435 410
- WO-A-03/004766
- WO-A-2004/035925
- WO-A-2005/052063
- DE-A1- 19 608 580
- US-A- 4 206 306
- US-A- 4 398 915

## Description

The present invention relates to a process for surface colouration of paper web by application of the dye grafted binder to the paper surface, followed by treatment of the dyed substrate with a fixing agent, in addition to certain water soluble or ready to use aqueous dispersions of a reactive dye grafted binders, a process for the preparation thereof and use thereof in the paper surface colouration process.

Despite the fact that the economical advantages of surface colouration of paper have long been recognized, in practice, surface colouration is not widespread when compared with stock dyeing. The main reason for this situation (see, for example, "On-machine surface coloration", A.S.Tindal, Surface Application of Paper Chemicals, 1997, 175-191) is that surface coloured paper generally exhibit poor bleed fastness when contacted with liquids such as water, alcohol or beverages.

One attempt to overcome this problem has been disclosed in WO 03/004766, whereby a dye composition containing a binder and thickener, which is a polyvinylpyrrolidone derivative, is applied to the paper surface. Preferably, the paper surface is treated with a fixing agent prior to the dyeing process in order to improve bleed fastness, but no concrete values are given to indicate the effectiveness of this approach.

A further approach to solving the problem of bleed fastness of dyes in surface coatings has been disclosed in US Patent 4,398,915. In this approach, fibre reactive dyes containing reactive halogen atoms are apparently reacted with cellulosic materials such as starch to form water insoluble colourant particles, which are then attached to the paper surface by means of a cross-linking agent. However, it is not apparent as to why such dye/cellulose reaction products are water insoluble and the second step of cross-linking in order to attach the colourant particles to the paper is clearly undesirable.

An object of the present invention was, therefore, to provide a process in which water soluble or ready to use aqueous dispersions of colouring agents, which exhibit improved bleed fastness and/or higher colour strength, are applied to paper surfaces.

It has now been found that reactive dyes may be covalently bound to appropriate binders to produce suitable water soluble colouring agents or coloured binder dispersions, which may then be fixed to the surface of the paper.

Consequently, the invention relates, in a first aspect, to a process for the surface colouration of paper characterised in that, in a first step, the paper surface is treated with a water soluble or aqueous dispersed compound which is the reaction product of a reactive dye and a binder and, subsequently, in a second step, the paper surface is treated with a fixing agent.

The term "reactive dye" relates to a particular group of dyestuffs, originally designed for dyeing textile fibres, wherein, in addition to the dye chromophore, the molecule contains a reactive functional group, capable of forming covalent bonds with functional groups of the fibre.

The dye chromophore may belong to virtually any class of suitable chemical entities, whilst the reactive groups may be distinguished by belonging to two essentially different classes (see, for example, Roempp Online Lexikon; Georg Thieme Verlag, Stuttgart, DE 2005; Dokumenterkennung RD-18-00483), differentiated by their modes of reaction.

The first class of reactive groups or anchors comprises, for example, halogenated, unsaturated, mostly heterocyclic residues such as, for example, 1,3,5-triazines, pyrazines, pyrimidines or pyridines. The halogen atoms, preferably chlorine or fluorine, react, in alkaline medium, with appropriate nucleophilic centres of the binder, under elimination of hydrogen halogenide and substitution of the hydrogen atom by the anchor attached to the chromophore, resulting in, for example, an amino, thioether, ester or ether linkage to the binder. This mode of reaction is termed substitution and, consequently, the anchor is said to be of the substitution type.

Thus, in one preferred aspect, the invention relates to a process for the surface colouration of paper, whereby, in a first step, the paper surface is treated with a water soluble or aqueous dispersed compound which is the reaction product of a reactive dye and a binder and, subsequently, in a second step, the paper surface is treated with a fixing agent, characterised in that the reactive group of the dye belongs to the substitution-type anchor.

Representatives of the second class of reactive group or anchor belong to the so-called addition type and contain, for example, hydrogen sulphate- or sulphamate esters. Typical examples are 3-hydroxypropionamido- and 2-hydroxyethyl sulphonyl groups, which, on treatment with alkali spontaneously eliminate a sulphate group to yield acrylamido or vinyl sulphonyl residues capable of undergoing addition reaction at appropriate nucleophilic sites of the fibres.

Consequently, in a second preferred aspect, the invention relates to a process for the surface colouration of paper, whereby, in a first step, the paper surface is treated with a water soluble or aqueous dispersed compound which is the reaction product of a reactive dye and a binder and, subsequently, in a second step, the paper surface is treated with a fixing agent, characterised in that the reactive group of the dye belongs to the addition-type anchor.

Any reactive dye, as disclosed in the Colour Index under the designation "Reactive" followed by colour and registration number, may be employed for preparation of the water soluble product utilized in the process of the invention. Suitable examples are selected from the group consisting of C.I. Reactive Blues 5, 7, 14, 21, 28, 39, 49, 72, 182, 184, 204, 235, 238, 244, 260, 261, 263, 262, 264, 265, 266, 268, 269, 271 and 274, C.I. Reactive Violet 2 and 6, C.I. Reactive Reds 24:1, 35, 106, 112, 120, 141, 152, 183, 184, 218, 228, 235, 238, 245, 264, 265, 266, 267, 269, 270, 271, 273, 277, 279 and 280, C.I. Reactive Oranges 13, 16, 35, 95, 116, 131, 132, 133, 134, 135 and 137 and from C.I. Reactive Yellows 42, 91, 95, 143, 161, 168, 174, 175, 205, 206, 207, 208, 209 and 210, although these examples are not intended to represent a restriction.

Most preferred reactive dyes are selected from those containing a 3-hydroxypropionamide and a 2-hydroxyethyl sulphonyl group as the addition type anchor.

In order that the reactive dye is able to react with the binder, said binder must possess appropriate reactive sites. Thus, in a third preferred aspect, the invention relates to a process for the surface colouration of paper, whereby, in a first step, the paper surface is treated with a water soluble or aqueous dispersed compound which is the reaction product of a reactive dye and a binder and, subsequently, in a second step, the paper surface is treated with a fixing agent, characterised in that the binder possesses nucleophilic sites. Typical nucleophilic sites are, for example, amino- thiol or, especially hydroxyl- and carboxylic acid groups.

Preferred binders for the preparation of the dye/binder reaction product used in the process of the invention are those selected from the group consisting of starch, starch derivatives, starch/latex copolymers, polyvinyl alcohols and polyvinyl amine/polyvinyl alcohol copolymers.

When starch is present in the composition, starch materials, useful as the binder component of the invention include practically all thinned starches of plant origin including starches from corn, wheat, potatoes, tapioca, rice, sago and sorghum. Waxy and high amylose starches may also be suitable. The starches can be thinned by acid hydrolysis, oxidative hydrolysis or enzymatic degradation. Further derivatized starches also suitable include those such as starch ethers, starch esters, cross-linked starches, oxidized starches and chlorinated starches, for example, carboxymethyl cellulose and hydroxyethyl methyl cellulose. Typical examples are the commercially available amylopectin, dextrin and, as a typical example of oxidized starch, Perfectamyl® 4692.

The starch may further be bound to synthetic latex by copolymerization of appropriate dienes and/or unsaturated monomers. Suitable dienes for the preparation of latex group may include 1,3-butadiene, isoprene, chloroprene, cyclobutadiene and divinyl benzene, whilst suitable unsaturated monomers may include alkyl acrylates and methacrylates, hydroxylated alkyl methacrylates, alkyl vinyl ketones, substituted acrylamides, methacrylic acid, N-methylol acrylamide, 2-hydroxyethyl acrylate, crotonic acid, itaconic acid, fumaric acid, maleic acid, maleic anhydride, vinyl halides, vinylidene halides, vinyl esters, vinyl ethers, vinyl carbazole, N-vinyl pyrrolidone, vinyl pyridine, chlorostyrene, alkyl styrene, ethylene, propylene, isobutylene, vinyl triethoxy silane and triphenyl vinyl silane. Preferred monomers include methyl methacrylate, dimethylamino ethyl acrylate, dimethylamino propyl acrylamide, vinyl acetate, acrylonitrile, acrylic acid, acrylamide, maleic anhydride, monovinyl silicon compounds including vinyl trimethyl silane, ethyl vinyl ether, chlorostyrene, vinyl pyridine, butyl vinyl ether, 2-ethylhexyl acrylate, isoprene and chloroprene, with vinylidine chloride, butyl vinyl ether and, especially styrene, being preferred.

Most preferred starch/latex copolymers are those derived from styrene and butadiene or acrylates and also a styrene/butadiene/starch copolymer, such as the commercial product Pensize® 730, a styrene/acrylate/starch copolymer or a styrene/acrylate/acrylonitrile/starch copolymer, such as the commercial product Raiprint® 501.

Polyvinyl alcohols may vary over wide ranges in terms of average molecular weight, for example between 200 and 4000, commercial products designated PVA 10-98 and PVA 4-98 being especially suitable. These may also be copolymerized with polyvinyl amines such as polyethylene imine.

Suitable fixing agents employed in the second step of the process of the invention can be amphoteric or cationic in nature and are preferably selected from the group consisting of polyamines and derivatives thereof, polyimines and derivatives thereof, polyethylene imines and derivatives thereof, polyethylene amines and derivatives thereof, amine/amide condensates, diallyl dimethyl ammonium chloride (DADMAC) and polymers thereof, polyaluminium chloride, magnesium chloride, calcium chloride and sodium chloride.

Most preferred cationic fixing agents are polyethylene polyamine derivatives, aliphatic polyamines and amine/amide/formaldehyde condensation products, commercially available under the designations Tinofix® ECO-N, Tinofix® AP and Tinofix® ECO-WSP.

In the application described above and in combination with the most preferred group of cationic fixing agents, those reactive dye grafted binders based on binders carrying an overall anionic charge are especially suitable.

The process of the invention is especially suitable for use for the surface colouration of paper.

Treatment of the paper surface may be performed using any suitable coating technique, although size press application, film press application and/or spraying techniques are preferred.

Furthermore, the quantities of the various components employed in the process of the invention may vary over wide ranges depending upon, for example, the depth of colour required and the method of application, particularly, by size press applications, the degree of pick-up.

However, in one further preferred aspect, the invention relates to a process for surface colouration of paper, whereby, in a first step, a composition comprising
a) from 0.1 to 20%, preferably 0.5 to 10%, by weight of the solid reaction product of reactive dye and binder,
b) from 0 to 20%, preferably 1 to 10%, by weight of a natural or synthetic binder or mixtures thereof,
c) from 0 to 20%, preferably 0 to 10%, by weight of one or more auxiliaries agent and
d) water to 100% by weight, is applied to the paper surface by means of a size press, film press or by spraying and, subsequently, without drying, in a second size press or film press application or by spraying, the paper surface is treated with an aqueous solution containing from 0.1 to 50%, preferably 0.1 to 10%, most preferably from 1 to 5% by weight of a fixing agent, thereafter the paper is subjected to drying.

In further preferred embodiments, either both the first and second steps of the process are performed in size or film presses, the first step is performed in the size or film press and the second application is by spraying or the first application is performed by spraying and the application of fixing agent is performed in the size or film press.

Where, in the above process, a further binder, component b), is present, this may constitute any natural or synthetic binder, indeed such as those employed in the preparation of the reactive dye grafted binder, as are described in detail above.

Furthermore, the above process of the invention may utilize further auxiliaries as component c). These may be selected from sizing agents, fixing agents, additional binder and binder resins, insolubilizing and/or cross linking agents, anionic, cationic and neutral polymers, wet-strength agents, antifoams and biocides.

Suitable auxiliaries may, for example, include polyethylene imines and derivatives thereof, inorganic salts such as sodium chloride, magnesium chloride, calcium chloride and potassium chloride, alum, alkyl ketene dimers, polydiallyl dimethyl ammonium chloride, polyamide amine resins, polyvinyl alcohol, polyvinyl pyrrolidone and homo and copolymers thereof, polyesters and polyethers, glyoxal derivatives, monoethanolamine, acrylic acid/alkyl acrylate copolymers and styrene/acrylate copolymers.

Use of the above process for the surface colouration of paper, in addition to paper, which has been treated by said process constitute further aspects of the invention as does paper, which has been subjected to the process of the invention, as disclosed above.

Certain dye grafted binders have previously been disclosed in US 4,398,915, but are restricted to the reaction products of starch and reactive dyes of the type containing dichlorotriazine residues, i.e. substitution-type, anchors.

Consequently, the invention further relates to a water soluble or aqueous dispersed compound, which is the reaction product of a reactive dye with a binder, characterised in that the reactive group of the dye belongs to the addition type anchor.

Typical reactive dyes contain, for example, hydrogen sulphate- or sulphamate esters, in particular 3-hydroxypropionamido- and 2-hydroxyethyl sulphonyl groups, which, on treatment with alkali spontaneously eliminate a sulphate group to yield acrylamido or vinyl sulphonyl residues capable of undergoing addition reaction at appropriate nucleophilic sites of the binder. Thus, the binder is characterised by possessing nucleophilic reactive sites for example, amino- thiol or, especially hydroxyl- and carboxylic acid groups.

Preferred binders for the preparation of the dye/binder reaction product used in the process of the invention are those selected from the group consisting of starch, starch derivatives, starch/latex copolymers, polyvinyl alcohols and polyvinyl amine/polyvinyl alcohol copolymers, further examples of which have already been listed above.

Furthermore, the invention relates to a water soluble or aqueous dispersed compound, which is the reaction product of a reactive dye with a binder, characterised in that the reactive group of the dye belongs to the substitution type anchor and that the binder is selected from the group consisting of starch/latex copolymers, polyvinyl alcohols and polyvinyl amine/polyvinyl alcohol copolymers, typical examples of such binders having already been listed above.

Such dye grafted compounds are useful for the process disclosed above for surface colouration of paper and may be prepared by a process characterised in that the appropriate binder is treated, in aqueous solution, with the appropriate reactive dye in the presence of base. Suitable bases are organic or, especially inorganic bases such as lithium, potassium or sodium carbonates or hydroxides. Generally, the amount of base is such that the pH of the reaction mixture lies within the range of from 7.5 to 12.0, especially between 9.0 and 10.0, whilst the temperature may be from room temperature to 100°C, preferably between 50 to 90°C and especially between 60 and 80°C.

Following the application process of the invention described above, the dye grafted binders of the invention result in dyeings, which not only exhibit significantly improved or excellent bleed fastness towards water and alcohol, but also show, in many cases, improved boosting performance during fixing agent treatment relative to, or substantially higher colour strength than, when the dye and binder are applied individually and not as a covalently bound entity.

The following examples illustrate the invention without intending to be restrictive in nature; parts and percentages are by weight unless stated otherwise.

### A. Preparation of Reactive Dye grafted Binders

### Example 1

20g of commercially available amylopectin are made up to 250g with deionised water and the resulting viscous suspension slowly heated to 90°C, whereby a readily stirrable opaque solution results. After cooling to 80°C, the pH is adjusted to 9.5 by addition of 4N aqueous sodium hydroxide solution and an aqueous solution of 10g of C.I. Reactive Red 183 dissolved in a little water added, the pH being maintained at 9.5-10.0 during the addition. The reaction mixture is then stirred until thin layer chromatography indicates that reaction is complete.

There are obtained 350g of an opaque solution containing 5.7% of amylopectin to which 2.9% of dye is grafted. The solution is utilized directly in dye baths for the surface colouration of paper.

### Example 2

By proceeding as described in Example 1, but replacing the 10g of C.I. Reactive Red 183 by 8.2g of C.I. Reactive Red 24:1, 400g of a corresponding opaque solution of dye grafted binder containing 5.0% of amylopectin to which 2.0% dye is grafted is obtained.

### Example 3

By proceeding as described in Example 1, but replacing the 10g of C.I. Reactive Red 183 by 8.4g of C.I. Reactive Red 228, 330g of a corresponding opaque solution of dye grafted binder containing 6.1% amylopectin to which 2.6% dye is grafted is obtained.

### Example 4

40g of the polyvinyl alcohol PVA 4-98 are made up to 500g with deionised water and the mixture is slowly heated to 80°C, whereupon an opaque solution results. After cooling to 60°C, the pH is adjusted to 9.5 by addition of 4N aqueous sodium hydroxide solution and maintained at 9.5-10.0 during the addition of a solution of 30g of C.I. Reactive Red 183 dissolved in a little water. The reaction mixture is stirred until thin layer chromatography indicates that reaction is complete.

There are obtained 700g of a homogeneous solution containing 5.7% of the polyvinyl alcohol to which 4.3% of dye is grafted. The solution is utilized directly in dye baths for the surface colouration of paper.

### Example 5

By proceeding essentially as described in Example 4, but replacing the 30g of C.I. Reactive Red 183 by 16.3g of C.I. Reactive Red 24:1, 640g of a corresponding solution of dye grafted PVA 4-98 containing 6.2% of polyvinyl alcohol to which 2.5% dye is grafted is obtained.

### Example 6

By proceeding essentially as described in Example 4, but replacing the 30g of C.I. Reactive Red 183 by 16.8g of C.I. Reactive Red 228, a corresponding solution of dye grafted PVA 4-98 containing 7.2% of the polyvinyl alcohol to which 3.0% dye is grafted is obtained.

### Example 7

By proceeding essentially as described in Example 4, but replacing the 40g of PVA 4-98 by 40g of the polyvinyl alcohol PVA 10-98, 700g of a corresponding solution of C.I. Reactive Red 183 grafted PVA 10-98 containing 5.7% of the polyvinyl alcohol to which 4.3% dye is grafted is obtained.

### Example 8

By proceeding essentially as described in Example 4, but replacing the 40g of PVA 4-98 by 40g of the polyvinyl alcohol PVA 10-98 and the 30g of C.I. Reactive Red 183 by 16.3g of C.I. Reactive Red 24:1,590g of a corresponding solution of C.I. Reactive Red 24:1 grafted PVA 10-98 containing 6.8% of the polyvinyl alcohol to which 2.8% dye is grafted is obtained.

### Example 9

50g of commercially available Dextrin are made up to 350g with deionised water and the mixture is slowly heated to 75°C, whereupon a thin fluid, opaque solution results. After cooling to 60°C, the pH is adjusted to 9.0 by addition of 4N aqueous sodium hydroxide solution and maintained at 9.0-9.5 during the portion wise addition of a solution of 25g of C.I. Reactive Red 228 dissolved in a little water. The reaction mixture is stirred until thin layer chromatography indicates that reaction is complete.

There are obtained 430g of a homogeneous solution containing 11.6% of dextrin to which 5.8% of dye is grafted. The solution is utilized directly in dye baths for the surface colouration of paper.

### Example 10

By proceeding essentially as described in Example 9, but starting from 20g of dextrin and replacing the 25g of C.I. Reactive Red 228 by 10g of C.I. Reactive Red 183, 270g of a corresponding solution of dye grafted binder containing 7.3% dextrin to which 3.7% dye is grafted is obtained.

### Example 11

By proceeding essentially as described in Example 9, but starting from 20g of dextrin and replacing the 25g of C.I. Reactive Red 228 by 8.2g of C.I. Reactive Red 24:1, 300g of a corresponding solution of dye grafted binder containing 6.6% dextrin to which 2.7% dye is grafted is obtained.

### Example 12

By proceeding essentially as described in Example 9, but starting from 37.5g of dextrin and replacing the 25g of C.I. Reactive Red 228 by 21 g of C.I. Reactive Yellow 42, 390g of a corresponding solution of dye grafted binder containing 9.6% dextrin to which 5.4% dye is grafted is obtained.

### Example 13

By proceeding essentially as described in Example 9, but starting from 37.5g of dextrin and replacing the 25g of C.I. Reactive Red 228 by 15.8g of C.I. Reactive Orange 134, 450g of a corresponding solution of dye grafted binder containing 8.3% dextrin to which 3.5% dye is grafted is obtained.

### Example 14

By proceeding essentially as described in Example 9, but starting from 37.5g of dextrin and replacing the 25g of C.I. Reactive Red 228 by 24.6g of C.I. Reactive Blue 260, 480g of a corresponding solution of dye grafted binder containing 7.8% dextrin to which 5.1 % dye is grafted is obtained.

### Example 15

By proceeding essentially as described in Example 9, but starting from 37.5g of dextrin and replacing the 25g of C.I. Reactive Red 228 by 25g of C.I. Reactive Blue 21, 410g of a corresponding solution of dye grafted binder containing 9.1% dextrin to which 6.1% dye is grafted is obtained.

### Example 16

50g of Avebe Perfectamyl® 4692 (a commercially available oxidized starch) are made up to 400g with deionised water and the mixture is slowly heated to 80°C, whereupon a thin fluid, opaque solution results. After cooling to 60°C, the pH is adjusted to 9.5 by addition of 4N aqueous sodium hydroxide solution and maintained at 9.0-9.5 during the portion wise addition of a solution of 25g of C.I. Reactive Red 183 dissolved in a little water. The reaction mixture is stirred until thin layer chromatography indicates that reaction is complete.

There are obtained 565g of a homogeneous solution containing 8.9% of the starch to which 4.4% of dye is grafted. The solution is utilized directly in dye baths for the surface colouration of paper.

### Example 17

By proceeding essentially as described in Example 16, but starting from 25g of Perfectamyl® 4692 and replacing the 25g of C.I. Reactive Red 183 by 10.5g of C.I. Reactive Red 228, 310g of a corresponding solution of dye grafted binder containing 8.0% of the starch to which 3.4% dye is grafted is obtained.

### Example 18

By proceeding essentially as described in Example 16, but starting from 25g of Perfectamyl® 4692 and replacing the 25g of C.I. Reactive Red 183 by 10.2g of C.I. Reactive Red 24:1, 270g of a corresponding solution of dye grafted binder containing 9.3% of the starch to which 3.8% of dye is grafted is obtained.

### Example 19

164g of Pensize® 730 (a commercially available aqueous formulation of a starch/styrene/butadiene latex copolymer) are made up to 400g with deionised water and the mixture is slowly heated to 60°C. The pH of the resulting thin fluid, stable dispersion is adjusted to 9.5 by addition of 4N aqueous sodium hydroxide solution and maintained at 9.0-9.5 during the portion wise addition of a solution of 25g of C.I. Reactive Red 228 dissolved in a little water. The reaction mixture is stirred until thin layer chromatography indicates that reaction is complete.

There are obtained 533g of a homogeneous dispersion containing 9.2% of Pensize® 730 (solids) to which 4.7% of dye is grafted. The dispersion is utilized directly in dye baths for the surface colouration of paper.

### Example 20

By proceeding essentially as described in Example 19, but starting from 70g of Pensize® 730 and replacing the 25g of C.I. Reactive Red 228 by 13.1g of C.I. Reactive Red 183, 310g of a corresponding dispersion of dye grafted binder containing 6.8% Pensize® 730 (solids) to which 4.3% dye is grafted is obtained.

### Example 21

By proceeding essentially as described in Example 19, but starting from 70g of Pensize® 730 and replacing the 25g of C.I. Reactive Red 228 by 10.2g of C.I. Reactive Red 24:1, 310g of a corresponding dispersion of dye grafted binder containing 6.8% Pensize® 730 (solids) to which 3.3% dye is grafted is obtained.

### Example 22

By proceeding essentially as described in Example 19, but starting from 125g of Pensize® 730 and replacing the 25g of C.I. Reactive Red 228 by 21 g of C.I. Reactive Yellow 42, 410g of a corresponding dispersion of dye grafted binder containing 9.1 % Pensize® 730 (solids) to which 5.1% dye is grafted is obtained.

### Example 23

By proceeding essentially as described in Example 19, but starting from 125g of Pensize® 730 and replacing the 25g of C.I. Reactive Red 228 by 15.8g of C.I. Reactive Orange 134, 450g of a corresponding dispersion of dye grafted binder containing 8.4% Pensize® 730 (solids) to which 3.5% dye is grafted is obtained.

### Example 24

By proceeding essentially as described in Example 19, but starting from 125g of Pensize® 730 and replacing the 25g of C.I. Reactive Red 228 by 24.6g of C.I. Reactive Blue 260, 440g of a corresponding dispersion of dye grafted binder containing 8.6% Pensize® 730 (solids) to which 5.6% dye is grafted is obtained.

### Example 25

140g of Raiprint® 501 (a commercially available aqueous formulation of a starch/latex copolymer) are made up to 400g with deionised water and the mixture is heated to 60°C. The pH of the resulting thin fluid, stable dispersion is adjusted to 9.5 by addition of 4N aqueous sodium hydroxide solution and maintained at 9.0-9.5 during the portion wise addition of a solution of 25g of C.I. Reactive Red 228 dissolved in a little water. The reaction mixture is stirred until thin layer chromatography indicates that reaction is complete.

There are obtained 550g of a homogeneous dispersion containing 8.9% of Raiprint® 501 to which 4.5% of dye is grafted. The dispersion is utilized directly in dye baths for the surface colouration of paper.

### Example 26

By proceeding essentially as described in Example 25, but starting from 107g of Raiprint® 501 and replacing the 25g of C.I. Reactive Red 228 by 21 g of C.I. Reactive Yellow 42, 380g of a corresponding dispersion of dye grafted binder containing 9.8% Raiprint® 501 (solids) to which 5.5% dye is grafted is obtained.

### Example 27

By proceeding essentially as described in Example 25, but starting from 107g of Raiprint®. 501 and replacing the 25g of C.I. Reactive Red 228 by 15.8g of C.I. Reactive Orange 134, 410g of a corresponding dispersion of dye grafted binder containing 9.2% Raiprint® 501 (solids) to which 3.9% dye is grafted is obtained.

### Example 28

By proceeding essentially as described in Example 25, but starting from 107g of Raiprint® 501 and replacing the 25g of C.I. Reactive Red 228 by 24.6g of C.I. Reactive Blue 260, 400g of a corresponding dispersion of dye grafted binder containing 9.4% Raiprint® 501 (solids) to which 6.2% dye is grafted is obtained.

### Example 29

164g of Raiprint® 300 (a commercially available aqueous formulation of a starch/latex copolymer) are made up to 400g with deionised water and the mixture is heated to 60°C. The pH of the resulting thin fluid, stable dispersion is adjusted to 9.5 by addition of 4N aqueous sodium hydroxide solution and maintained at 9.0-9.5 during the portion wise addition of a

solution of 25g of C.I. Reactive Red 228 dissolved in a little water. The reaction mixture is stirred until thin layer chromatography indicates that reaction is complete.

There are obtained 580g of a homogeneous dispersion containing 8.4% of Raiprint® 300 (solids) to which 3.7% of dye is grafted. The dispersion is utilized directly in dye baths for the surface colouration of paper.

### B. Application Examples

### I. Size Press Application of Dye Grafted Binder and of Fixing Agent

### Base Paper:

The base paper used for the application was fabricated on a laboratory paper machine at UMIST, Manchester, UK from a 70/30 mixture of hard and soft woods pulp beaten to 35° SR, containing 10% retained clay (plus 1% calcium carbonate) filler, 0.4% Hercat® 27JP pseudo neutral size, 1% alum and 0.02% Percol® 230 retention agent. The resulting paper has a base weight of 103g/m² and a Cobb value of 95g/m².

### Application:

In a Mathis size press running at 5m/min., with a pressure of 200kPas and at a temperature of 50°C, the base paper is firstly treated with a solution containing the defined amounts of dye grafted binder (see Table 1), 25g of a 10% aqueous solution of size press starch (Perfectamyl® 4692), the bath being made up to 100g with water.

For comparative purposes, size press baths containing defined quantities of non-grafted reactive dyes and 50g of a 10% aqueous solution of size press starch (Perfectamyl® 4692), are made up to 100g with water and applied in an identical manner.

The moist dyeings are then, in a second size press application, treated at room temperature with solutions containing 1, 2.5 and 5% Tinofix® ECO-N fixing agent, after which the paper is dried.

The resulting colour strengths of the dyeings are then measured, whereby the values given in Table 1 are corrected to take into account the amount of dye actually residing on the paper surface.

Additionally, the bleed fastness of the dyeings towards water and 50% alcohol/water are measured by firstly moistening the dyeing with deionised water and alcohol/water respectively and placing the moist dyeings between two sheets of either white filter papers or glass fibre sheets which are moistened with deionised water and alcohol/water respectively. The resulting sandwich is placed between two glass plates weighted with a 1 kg weight. After 1 hour at room temperature, the individual sheets are dried and the bleed fastness assessed by means of the grey scale, whereby a value between 1 (very strong bleeding) and 5 (zero bleeding) is obtained.

The results of the measurements are summarized in the following Table 1 below:

**Table 1**

| **Ex. No.** | **Dye-Binder or Dye ¹/%** | **%Pick -up** | **%Fixative** | **%Pick-up** | **Colour Strength%** | **Bleed water PF²/GF³** | **Bleed alcohol PF²/GF³** |
|---|---|---|---|---|---|---|---|
| 30a | Ex. 14/37 | 58.1 | None | | 100 | 1-2/2 | 1-2+/2 |
| 30b | Ex. 14/37 | 58.2 | 1 | 28.5 | 133.5 | 1-2+/2 | 2/3 |
| 30c | Ex. 14/37 | 55.2 | 2.5 | 28.8 | 105 | 1-2+/3 | 2-3+/3-4 |
| 30d | Ex. 14/37 | 56.1 | 5 | 29.9 | 100 | 3/3-4 | 4-5+/4-5+ |
| 31a | Ex. 24/34 | 50.3 | None | | 100 | 1-2+/2 | 2/3 |
| 31 b | Ex. 24/34 | 50.0 | 1 | 30.5 | 108 | 2/3 | 2-3/3-4 |
| 31c | Ex. 24/34 | 51.5 | 2.5 | 30.1 | 104 | 2-3/3+ | 3/4-5 |
| 31 d | Ex. 24/34 | 51.3 | 5 | 28.1 | 103 | 4+/4-5 | 4-5+/5 |
| 32a | Ex. 28/31 | 52.8 | None | | 100 | 1-2+/2-3 | 1-2+/2-3 |
| 32b | Ex. 28/31 | 54.0 | 1 | 29.4 | 95 | 2+/3 | 2-3/3-4 |
| 32c | Ex. 28/31 | 55.3 | 2.5 | 28.6 | 97 | 2-3/4 | 3+/4-5 |
| 32d | Ex. 28/31 | 51.2 | 5 | 29.6 | 101 | 4-5/4-5 | 4-5+/5 |
| 33a⁴ | RBL 260/1.9 | 50.6 | None | | 100 | 1-2+/3 | 1-2/2-3 |
| 33b⁴ | RBL 260/1.9 | 49.1 | 1 | 33.5 | 115 | 1-2+/3 | 1-2/2-3 |
| 33c⁴ | RBL 260/1.9 | 48.9 | 2.5 | 31.0 | 100 | 2+/3+ | 2/3 |
| 33d⁴ | RBL 260/1.9 | 51.2 | 5 | 30.4 | 100 | 4-5/4-5 | 3/4 |
| | | | | | | | |
| 34a | Ex. 13/35 | 55.8 | None | | 100 | 1-2/1-2 | 2/2-3+ |
| 34b | Ex. 13/35 | 57.7 | 1 | 26.4 | 129 | 1-2+/1-2+ | 4-5/4-5 |
| 34c | Ex. 13/35 | 59.6 | 2.5 | 25.5 | 108 | 2+/2+ | 4-5/4-5 |
| 34d | Ex. 13/35 | 56.3 | 5 | 26.9 | 100 | 4/3-4 | 4-5+/5 |
| 35a | Ex. 23/35 | 46.0 | None | | 100 | 1-2+/3 | 2-3/3+ |
| 35b | Ex. 23/35 | 45.7 | 1 | 30.2 | 108 | 2-3+/3 | 3+/4-5 |
| 35c | Ex. 23/35 | 42.3 | 2.5 | 29.4 | 108 | 4+/4+ | 4-5+/5 |
| 35d | Ex. 23/35 | 42.7 | 5 | 30.5 | 112 | 4-5/4-5 | 5/5 |
| 36a | Ex. 27/32 | 55.1 | None | | 100 | 1-2+/2+ | 2/3 |
| 36b | Ex. 27/32 | 53.8 | 1 | 29.6 | 107 | 2-3/3+ | 3+/4 |
| 36c | Ex. 27/32 | 51.8 | 2.5 | 28.6 | 106.5 | 4+/4 | 4-5+/5 |
| 36d | Ex. 27/32 | 52.7 | 5 | 28.5 | 107 | 4-5/4-5+ | 5/5 |
| 37a⁴ | RO 134/1.25 | 54.9 | None | | 100 | 1-2+/2+ | 1-2+/2+ |
| 37b⁴ | RO 134/1.25 | 57.2 | 1 | 28.3 | 101 | 2/2-3 | 2/2+ |
| 37c⁴ | RO 134/1.25 | 48.8 | 2.5 | 30.6 | 104 | 3-4/4 | 2+/2-3+ |
| 37d⁴ | RO 134/1.25 | 52.2 | 5 | 29.2 | 112 | 4-5/4-5 | 3-4+/4-5 |

| | | | | | | | |
|---|---|---|---|---|---|---|---|
| ¹ RBL = C.I. Reactive Blue; RO = C.I. Reactive Orange ² PF = Bleed fastness between filter papers; ³ GF = Bleed fastness between glass fibre sheet ⁴ For comparison only, not a facet of the invention | | | | | | | |

### II. Size Press Application of Dye Grafted Binder and Spraying of Fixing Agent

In a further series of experiments, the anionic dye grafted binders are again applied in the size press, as described above, whilst the fixing agent, again Tinofix® ECO-N, at concentrations of 1 and 3%, is applied by spraying with a commercially available hand sprayer designed for spraying paint and aqueous solutions (Wagner W 600).

Where, in Table 2, for comparative purposes, non-grafted reactive dyes are applied, these are, in the case of C.I. Reactive Yellow 42, C.I. Reactive Red 228 and C.I. Reactive Blue 21, as described above, applied from a size press bath containing, in addition to the defined quantity of dye, 50g of a 10% aqueous solution of size press starch (Perfectamyl® 4692), which liquors are then made up to 100g with water. C.I. Reactive Blue 260, however, is applied from a size press bath containing, in addition to the 50g of 10% size press starch solution, 5g of Pensize® 730 binder, whereby the volume is again made up to 100g with water prior to application.

The results of the experiments are collated in Table 2 below:

**Table 2**

| **Ex**. **No.** | **Dye-Binder or Dye¹/%** | **%Pick -up** | **%Fixative** | **%Pick-up** | **Colour Strenght%** | **Bleed water PF²/GF³** | **Bleed alcohol PF²/GF³** |
|---|---|---|---|---|---|---|---|
| 38a | Ex. 14/37 | 60.1 | None | | 100 | 1-2/2 | |
| 38b | Ex. 14/37 | 57.1 | 1 | 92.3 | 159 | 1-2+/2+ | |
| 38c | Ex. 14/37 | 58.9 | 3 | 80.4 | 97 | 3/3-4 | |
| 39a | Ex. 24/34 | 48.5 | None | | 100 | 1-2/3 | |
| 39b | Ex. 24/34 | 47.1 | 1 | 102.9 | 113 | 2-3/3 | |
| 39c | Ex. 24/34 | 45.5 | 3 | 90.9 | 100 | 4-5+/4-5 | |
| 40a | Ex. 28/31 | 59.4 | None | | 100 | 1-2+/2 | |
| 40b | Ex. 28/31 | 59.8 | 1 | 88.2 | 101 | 2-3/3-4 | |
| 40c | Ex. 28/31 | 59.4 | 3 | 81.2 | 96 | 4-5+/4-5+ | |
| 41a⁴ | RBL 260/1.9 | 47.6 | None | | 100 | 1-2/3 | |
| 41b⁴ | RBL 260/1.9 | 40.0 | 1 | 111.3 | 104 | 3/4 | |
| 41c⁴ | RBL 260/1.9 | 49.7 | 3 | 103 | 88 | 4/4 | |
| | | | | | | | |
| 42a | Ex. 13/35 | 63.5 | None | | 100 | 2/3 | 1-2+/2-3 |
| 42b | Ex. 13/35 | 64.1 | 1 | 81.4 | 174 | 2+/3 | 3+/4-5 |
| 42c | Ex. 13/35 | 64.1 | 3 | 84.4 | 94 | 3/3 | 4-5+/4-5+ |
| 43a | Ex. 23/35 | 50.0 | None | | 100 | 2/3 | 2+/3 |
| 43b | Ex. 23/35 | 54.5 | 1 | 101.2 | 119 | 3/3 | 4-5/5 |
| 44a | Ex. 23/35 | 53.6 | 3 | 103.0 | 113 | 4-5/4+ | 4-5+/4-5+ |
| 45a | Ex. 27/32 | 57.1 | None | | 100 | 2/2-3 | 1-2+/3+ |
| 45b | Ex. 27/32 | 57.5 | 1 | 103.1 | 87 | 3/3-4 | 3-4/4-5 |
| 45c | Ex. 27/32 | 58.4 | 3 | 78.0 | 90 | 4-5/4-5 | 4-5+/4-5+ |
| 46a⁴ | RO 134/1.25 | 51.5 | None | | 100 | 1-2+/2-3 | 1-2+/2-3 |
| 46b⁴ | RO 134/1.25 | 54.2 | 1 | 82.5 | 97 | 2-3/4 | 2+/3 |
| 46c⁴ | RO 134/1.25 | 58.4 | 3 | 86.1 | 102 | 4+/4+ | 4-5/4-5 |
| | | | | | | | |
| 47a | Ex. 12/31 | 64.2 | None | | 100 | 1+/1-2 | 1-2/2 |
| 47b | Ex. 12/31 | 64.1 | 1 | 62.9 | 141 | 1+/1-2 | 2/2 |
| 47c | Ex. 12/31 | 64.5 | 3 | 85.8 | 110 | 2-3/3 | 4+/4+ |
| 48a | Ex. 22/33 | 48.1 | None | | 100 | 2-3/3 | 2+/2-3+ |
| 48b | Ex. 22/33 | 57.7 | 1 | 92.9 | 134 | 2-3+/3 | 3-4/4 |
| 48c | Ex. 22/33 | 53.6 | 3 | 89.3 | 111 | 4-5/4-5 | 4-5+/4-5+ |
| 49a | Ex. 26/31 | 60.7 | None | | 100 | 2+/3 | 2/2-3 |
| 49b | Ex. 26/31 | 59.4 | 1 | 96.5 | 109 | 4+/4+ | 3+/3-4 |
| 49c | Ex. 26/31 | 57.9 | 3 | 83.6 | 102.5 | 4-5/4-5 | 4-5/4-5 |
| 50a⁴ | RY 42/1.7 | 63.6 | None | | 100 | 1-2+/1-2+ | 2/2 |
| 50b⁴ | RY 42/1.7 | 63.6 | 1 | 70.9 | 115 | 1-2+/1-2+ | 2/2 |
| 50c⁴ | RY 42/1.7 | 60.8 | 3 | 84.9 | 111 | 4+/4 | 2/2 |
| | | | | | | | |
| 51 a | Ex. 9/27 | 60.4 | None | | 100 | 1-2/2 | 1-2/2 |
| 51 b | Ex. 9/27 | 59.2 | 1 | 76.3 | 162 | 1-2/2 | 2-3+/4 |
| 51 c | Ex. 9/27 | 60.6 | 3 | 87.9 | 109 | 2-3/3 | 4-5+/4-5+ |
| 52a⁴ | RR 228/1.55 | 56.9 | None | | 100 | 1-2/2 | 1-2/2 |
| 52b⁴ | RR 228/1.55 | 57.4 | 1 | 102.4 | 113 | 2+/3 | 2+/3 |
| 52c⁴ | RR 228/1.55 | 57.4 | | 3 85.8 | 115 | 4-5/4 | 4-5/4-5 |
| | | | | | | | |
| 53a | Ex. 15/66 | 55.5 | None | | 100 | 1/1-2 | |
| 53b | Ex. 15/66 | 53.6 | 1 | 93.4 | 148 | 1-2+/3 | |
| 53c | Ex. 15/66 | 55.8 | 3 | 100 | 104 | 3-4/3-4+ | |
| 54a⁴ | RBL 21/4 | 54.7 | None | | 100 | 1-2+/1-2+ | |
| 54b⁴ | RBL 21/4 | 56.8 | 1 | 81.7 | 113 | 2/3 | |
| 54c⁴ | RBL 21/4 | 50.3 | 3 | 95.9 | 107 | 4-5/4-5 | |

| | | | | | | | |
|---|---|---|---|---|---|---|---|
| ¹ RBL = C.I. Reactive Blue; RR = C.I. Reactive Red; RO = C.I. Reactive Orange; RY = C.I. Reactive Yellow ² PF = Bleed fastness between filter papers; ³ GF = Bleed fastness between glass fibre sheet ⁴ For comparison only, not a facet of the invention | | | | | | | |

In a further series of experiments, the dye grafted binders were compared to non-grafted equivalents by size press application followed by spraying with 1 or 2% solutions of the fixing agent Tinofix® ECO-N and drying.

However, as opposed to the previous experiments, summarized in Table 2, the dye grafted binder were applied from the size press by addition of 6-8g of a starch/latex copolymer instead of the 50g of 10% size press starch solution, the liquors being made up to 100g with water.

For the comparative experiments, defined quantities of the reactive dyes are added to 12g of the starch/ latex copolymer Pensize® 730 and the bath liquor made up to 100g with water.

The results of the experiments are summarized in the following Table 3:

**Table 3**

| **Ex. No.** | **Dye-Binder or Dye¹/%** | **%Pick -up** | **%Fixative** | **%Pick-up** | **Colour Strength%** | **Bleed water PF²/GF³** | **Bleed alcohol PF²/GF³** |
|---|---|---|---|---|---|---|---|
| 55a | Ex. 9⁵/51.5 | 51.8 | None | | 100 | 1-2/2 | 1-2/3 |
| 55b | Ex. 9⁵/51.5 | 56.9 | 1 | 95.8 | 186 | 2/2-3 | 4/4-5 |
| 55c | Ex. 9⁵/51.5 | 53.0 | 2 | 129.5 | 138 | 2-3/3 | 4-5/5 |
| 56a | Ex. 19/61 | 59.1 | None | | 100 | 1-2/2 | 2/3 |
| 56b | Ex. 19/61 | 57.5 | 1 | 69.4 | 141 | 3/3 | 3-4/4 |
| 56c | Ex. 19/61 | 59.5 | 2 | 76.1 | 104 | 4-5/4-5 | 4-5/5 |
| 57a | Ex. 25/50.5 | 42.4 | None | | 100 | 2+/2-3 | 1-2+/2-3+ |
| 57b | Ex. 25/50.5 | 38.7 | 1 | 124.4 | 118 | 5/5 | 5/5 |
| 57c | Ex. 25/50.5 | 42.2 | 2 | 141.0 | 104 | 4-5/4-5 | 5/5 |
| 58a | Ex. 29/53.5 | 29.5 | None | | 100 | 2+/2-3+ | 2/3 |
| 58b | Ex. 29/53.5 | 29.8 | 1 | 131.5 | 109 | 5/5 | 5/5 |
| 58c | Ex. 29/53.5 | 30.5 | 2 | 131.7 | 110.5 | 5/4-5+ | 5/5 |
| 59a⁴ | RR 228/1.55 | 64.5 | None | | 100 | 1-2/3 | 1-2/2-3 |
| 59b⁴ | RR 228/1.55 | 64.3 | 1 | 86.3 | 99 | 3/4 | 2-3/3 |
| 59c⁴ | RR 228/1.55 | 64.3 | 2 | 35.1 | 91 | 3/4 | 2-3/3 |

| | | | | | | | |
|---|---|---|---|---|---|---|---|
| ¹ RR = C.I. Reactive Red ² PF = Bleed fastness between filter papers; ³ GF = Bleed fastness between glass fibre sheet ⁴ For comparison only, not a facet of the invention ⁵ The product of Example 9 applied here is diluted and contains 4.77% C.I. Reactive Red 228 grafted to 8.91 % dextrin | | | | | | | |

The results summarized in the above Tables 1-3 clearly demonstrate the advantages of the process employing dye grafted binders of the invention when compared to dyes which are non-grafted. The products of the invention, in many cases, not only result in improved bleed fastness, but also to substantially improved colour strength.

## Claims

1. A process for the surface colouration of paper **characterised in that**, in a first step, the paper surface is treated with a water soluble or aqueous dispersed compound which is the reaction product of a reactive dye and a binder and, subsequently, in a second step, the paper surface is treated with a fixing agent.

2. A process according to claim 1, **characterised in that** the reactive group of the dye belongs to the substitution type anchor.

3. A process according to claim 1, **characterised in that** the reactive group of the dye belongs to the addition type anchor.

4. A process according to any one of claims 1 to 3 **characterised in that** the binder possesses nucleophilic reactive sites.

5. A process according to claim 4, **characterised in that** the binder is selected from the group consisting of starch, starch derivatives, starch/latex copolymers, polyvinyl alcohols and polyvinyl amine/polyvinyl alcohol copolymers.

6. A process according to any one of claims 1 to 5, **characterised in that** the fixing agent is selected from the group consisting of polyamines and derivatives thereof, polyimines and derivatives thereof, polyethylene imines and derivatives thereof, polyethylene amines and derivatives thereof, amine/amide condensates, diallyl dimethyl ammonium chloride (DADMAC) and polymers thereof, polyaluminium chloride, magnesium chloride, calcium chloride and sodium chloride.

7. A process according to any one of claims 1 to 6, whereby in a first step, a composition comprising
a) from 0.1 to 20% by weight of the reaction product of reactive dye and binder (solid),
b) from 0 to 20% by weight of a natural or synthetic binder or mixtures thereof,
c) from 0 to 20% by weight of one or more auxiliaries agent and
d) water to 100% by weight, is applied to the paper surface by means of a size press, film press or by spraying and, subsequently, without drying, in a second size press or film press application or by spraying, the paper surface is treated with an aqueous solution containing from 0.1 to 50% by weight of a fixing agent, thereafter the paper is subjected to drying.

8. Use of the process according to any one of the previous claims for the surface colouration of paper.

9. Paper, which has been treated by the process according to any one of claims 1 to 7.

10. A water soluble or aqueous dispersed compound, which is the reaction product of a reactive dye with a binder, **characterised in that** the reactive group of the dye belongs to the addition type anchor.

11. A compound according to claim 10, wherein the binder is **characterised by** possessing nucleophilic reactive sites.

12. A compound according to claim 11, wherein the binder is selected from the group consisting of starch, starch derivatives, starch/latex copolymers, polyvinyl alcohols and polyvinyl amine/polyvinyl alcohol copolymers.

13. A water soluble or aqueous dispersed compound, which is the reaction product of a reactive dye with a binder, **characterised in that** the reactive group of the dye belongs to the substitution type anchor and that the binder is selected from the group consisting of starch/latex copolymers, polyvinyl alcohols and polyvinyl amine/polyvinyl alcohol copolymers.

14. A process for the preparation of the compound according to any one of claims 10 to 13 **characterised in that**, in aqueous solution, the binder is treated with the reactive dye in the presence of base.

15. Use of the compound according to any one of claims 10 to 13 for the surface colouration of paper according to the process of any one of claims 1 to 9.

## Patentansprüche

1. Verfahren zur Oberflächen-Färbung von Papier, **dadurch gekennzeichnet, dass** in einem ersten Schritt die Papier-Oberfläche mit einer in Wasser löslichen oder wässrig dispergierten Verbindung, die das Reaktions-Produkt von einem reaktiven Farbstoff bzw. Reaktiv-Farbstoff und einem Bindemittel darstellt, behandelt wird und anschließend in einem zweiten Schritt die Papier-Oberfläche mit einem Fixiermittel behandelt wird.

2. Verfahren nach Anspruch 1, **dadurch gekennzeichnet, dass** die reaktive Gruppe von dem Farbstoff zu dem Substitutions-Typ-Anker gehört.

3. Verfahren nach Anspruch 1, **dadurch gekennzeichnet, dass** die reaktive Gruppe von dem Farbstoff zu dem Additions-Typ-Anker gehört.

4. Verfahren nach einem der Ansprüche 1 bis 3, **dadurch gekennzeichnet, dass** das Bindemittel nukleophile reaktive Stellen besitzt.

5. Verfahren nach Anspruch 4, **dadurch gekennzeichnet, dass** das Bindemittel ausgewählt ist aus der Gruppe, bestehend aus Stärke, Stärke-Derivaten, Stärke / Latex-Copolymeren, Polyvinylalkoholen und Polyvinylamin / Polyvinylalkohol-Copolymeren.

6. Verfahren nach einem der Ansprüche 1 bis 5, **dadurch gekennzeichnet, dass** das Fixiermittel ausgewählt ist aus der Gruppe, bestehend aus Polyaminen und Derivaten davon, Polyiminen und Derivaten davon, Polyethyleniminen und Derivaten davon, Polyethylenaminen und Derivaten davon, Amin / Amid-Kondensaten, Diallyl-dimethyl-ammoniumchlorid (DADMAC) und Polymeren davon, Polyaluminiumchlorid, Magnesiumchlorid, Calciumchlorid und Natriumchlorid.

7. Verfahren nach einem der Ansprüche 1 bis 6, wobei in einem ersten Schritt eine Zusammensetzung, umfassend
a) von 0,1 bis 20 Gew.-% von dem Reaktions-Produkt von reaktivem Farbstoff und Bindemittel (fest),
b) von 0 bis 20 Gew.-% von einem natürlichen oder synthetischen Bindemittel oder Gemischen davon,
c) von 0 bis 20 Gew.-% von einem oder mehreren Hilfsmitteln und
d) Wasser bis 100 Gew.-%, auf die Papier-Oberfläche mit Hilfe von einer Leimpresse, Filmpresse oder durch Sprühen aufgetragen wird und anschließend ohne Trocknen, in einer zweiten Leimpressen- oder Filmpressen-Auftragung oder durch Sprühen, die Papier-Oberfläche mit einer wässrigen Lösung, enthaltend von 0,1 bis 50 Gew.-% von einem Fixiermittel, behandelt wird, wobei danach das Papier Trocknen unterzogen wird.

8. Verwendung von dem Verfahren nach einem der vorangehenden Ansprüche für die Oberflächen-Färbung von Papier.

9. Papier, das durch das Verfahren nach einem der Ansprüche 1 bis 7 behandelt wurde.

10. In Wasser lösliche oder wässrig dispergierte Verbindung, die das Reaktions-Produkt von einem reaktiven Farbstoff mit einem Bindemittel ist, **dadurch gekennzeichnet, dass** die reaktive Gruppe von dem Farbstoff zu dem Additions-Typ-Anker gehört.

11. Verbindung nach Anspruch 10, worin das Bindemittel **dadurch gekennzeichnet ist, dass** es nukleophile reaktive Stellen aufweist.

12. Verbindung nach Anspruch 11, worin das Bindemittel ausgewählt ist aus der Gruppe, bestehend aus Stärke, Stärke-Derivaten, Stärke / Latex-Copolymeren, Polyvinylalkoholen und Polyvinylamin / Polyvinylalkohol-Copolymeren.

13. In Wasser lösliche oder wässrig dispergierte Verbindung, die das Reaktions-Produkt von einem reaktiven Farbstoff bzw. Reaktiv-Farbstoff mit einem Bindemittel ist, **dadurch gekennzeichnet, dass** die reaktive Gruppe von dem Farbstoff zu dem Substitutions-Typ-Anker gehört und dass das Bindemittel ausgewählt ist aus der Gruppe, bestehend aus Stärke / Latex-Copolymeren, Polyvinylalkoholen und Polyvinylamin / Polyvinylalkohol-Copolymeren.

14. Verfahren für die Herstellung von der Verbindung nach einem der Ansprüche 10 bis 13, **dadurch gekennzeichnet, dass** in wässriger Lösung das Bindemittel mit dem reaktiven Farbstoff bzw. Reaktiv-Farbstoff in Gegenwart von Base behandelt wird.

15. Verwendung von der Verbindung nach einem der Ansprüche 10 bis 13 für die Oberflächen-Färbung von Papier gemäß dem Verfahren von einem der Ansprüche 1 bis 9.

## Revendications

1. Procédé de coloration de surface de papier, **caractérisé en ce que**, dans une première étape, la surface du papier est traitée par un composé soluble dans l'eau ou dispersé dans l'eau, qui est le produit de réaction d'un colorant réactif et d'un liant, et ensuite, dans une deuxième étape, la surface du papier est traitée par un agent de fixage.

2. Procédé selon la revendication 1, **caractérisé en ce que** le groupement réactif du colorant appartient à l'ancrage de type substitution.

3. Procédé selon la revendication 1, **caractérisé en ce que** le groupement réactif du colorant appartient à l'ancrage de type addition.

4. Procédé selon l'une quelconque des revendications 1 à 3, **caractérisé en ce que** le liant possède des sites réactifs nucléophiles.

5. Procédé selon la revendication 4, **caractérisé en ce que** le liant est choisi dans le groupe constitué par l'amidon, les dérivés d'amidon, les copolymères d'amidon/latex, les alcools polyvinyliques et les copolymères de polyvinylamine/alcool polyvinylique.

6. Procédé selon l'une quelconque des revendications 1 à 5, **caractérisé en ce que** l'agent de fixage est choisi dans le groupe constitué par les polyamines et les dérivés de celles-ci, les polyimines et les dérivés de celles-ci, les polyéthylène imines et les dérivés de celles-ci, les polyéthylène amines et les dérivés de celles-ci, les condensats d'amine/amide, le chlorure de diallyldiméthylammonium (DADMAC) et les polymères de celui-ci, le chlorure de polyaluminium, le chlorure de magnésium, le chlorure de calcium et le chlorure de sodium.

7. Procédé selon l'une quelconque des revendications 1 à 6, dans lequel, dans une première étape, une composition comprenant
a) de 0,1 à 20% en poids du produit de réaction de colorant réactif et de liant (solide),
b) de 0 à 20% en poids d'un liant naturel ou synthétique ou des mélanges de celui-ci,
c) de 0 à 20% en poids d'un ou plusieurs agents auxiliaires, et
d) de l'eau jusqu'à 100% en poids, est appliquée à la surface du papier au moyen d'une presse encolleuse, d'un presse-film, ou par pulvérisation, et ensuite, sans séchage, dans une deuxième application par presse encolleuse ou presse-film ou par pulvérisation, la surface du papier est traitée par une solution aqueuse contenant de 0,1 à 50% en poids d'un agent de fixage, après quoi le papier est soumis à un séchage.

8. Utilisation du procédé selon l'une quelconque des revendications précédentes pour la coloration de surface de papier.

9. Papier ayant été traité par le procédé selon l'une quelconque des revendications 1 à 7.

10. Composé soluble dans l'eau ou dispersé dans l'eau, qui est le produit de réaction d'un colorant réactif et d'un liant, **caractérisé en ce que** le groupement réactif du colorant appartient à l'ancrage de type addition.

11. Composé selon la revendication 10, dans lequel le liant est **caractérisé en ce qu'**il possède des sites réactifs nucléophiles.

12. Composé selon la revendication 11, dans lequel le liant est choisi dans le groupe constitué par l'amidon, les dérivés d'amidon, les copolymères d'amidon/latex, les alcools polyvinyliques et les copolymères de polyvinylamine/alcool polyvinylique.

13. Composé soluble dans l'eau ou dispersé dans l'eau, qui est le produit de réaction d'un colorant réactif et d'un liant, **caractérisé en ce que** le groupement réactif du colorant appartient à l'ancrage de type substitution, et **en ce que** le liant est choisi dans le groupe constitué par les copolymères d'amidon/latex, les alcools polyvinyliques et les copolymères de polyvinylamine/alcool polyvinylique.

14. Procédé de préparation du composé selon l'une quelconque des revendications 10 à 13, **caractérisé en ce que**, en solution aqueuse, le liant est traité par le colorant réactif en présence d'une base.

15. Utilisation du composé selon l'une quelconque des revendications 10 à 13, pour la coloration de surface de papier selon le procédé selon l'une quelconque des revendications 1 à 9.
